# EUROPEAN PATENT SPECIFICATION

(11) **EP 4 018 023 B1**
(45) Date of publication and mention of the grant of the patent: **01.11.2023**
(21) Application number: 20760546.0
(22) Date of filing: 06.08.2020
(51) Int. Cl.: D01F 8/06, B33Y 70/00

(54) **CORE-SHEATH FILAMENTS INCLUDING DIENE-BASED RUBBERS AND METHODS OF MAKING THE SAME**
KERN-HÜLLE-FILAMENTE MIT KAUTSCHUKEN AUF DIENBASIS UND VERFAHREN ZU DEREN HERSTELLUNG
FILAMENTS À COEUR-GAINE COMPRENANT DES CAOUTCHOUCS À BASE DE DIÈNE ET LEURS PROCÉDÉS DE FABRICATION

(30) Priority: 21.08.2019 US 201962889923 P
(43) Date of publication of application: 29.06.2022
(73) Proprietor: 3M Innovative Properties Company, Saint Paul, Minnesota 55133-3427 (US)
(72) Inventor: SAHNI, Vasav, Saint Paul, Minnesota 55133-3427 (US); PATNODE, Gregg A., Saint Paul, Minnesota 55133-3427 (US); BOLTON, Justin M., Saint Paul, Minnesota 55133-3427 (US); CLAPPER, Jason D., Saint Paul, Minnesota 55133-3427 (US)
(74) Representative: Mathys & Squire
(86) International application number: PCT/IB2020/057452
(87) International publication number: WO 2021/033064

(56) References cited:
- WO-A1-2015/195527
- WO-A1-2017/009190
- WO-A1-2018/199959
- WO-A2-2005/005701
- US-A1- 2019 144 715

## Description

### TECHNICAL FIELD

The present disclosure broadly relates to core-sheath filaments including adhesive cores and non-tacky sheaths.

### BACKGROUND

The use of fused filament fabrication ("FFF") to produce three-dimensional articles has been known for a relatively long time, and these processes are generally known as methods of so-called 3D printing (or additive manufacturing). In FFF, a plastic filament is melted in a moving printhead to form a printed article in a layer-by-layer, additive manner. The filaments are often composed of polylactic acid, nylon, polyethylene terephthalate (typically glycol-modified), or acrylonitrile butadiene styrene.

Pressure-sensitive adhesives including diene-based rubbers have been used in various applications.

### SUMMARY

Provided herein are core-sheath filaments that comprise cores having diene-based rubbers that are crosslinked by multifunctional acrylates, thus resulting in superior high-temperature performance adhesives. The adhesive compositions have excellent durability against oxygen and moisture, low and stable dielectric properties, and superior high-temperature performance.

In one aspect, provided is a core-sheath filament comprising:
a non-tacky sheath, wherein the non-tacky sheath exhibits a melt flow index of less than 15 grams per 10 minutes (g/10 min); and
an adhesive core, wherein the adhesive core comprises:
   at least 20 wt. to % 60 wt.% of a polymer selected from the group consisting of a styrene-isoprene block copolymer and an isobutylene-isoprene copolymer; and
   a multifunctional (meth)acrylate.

In another aspect, provided is a cured adhesive composition comprising the core-sheath filament of the present disclosure, the cured adhesive composition being a product resulting from irradiation at 215 nm to 410 nm of the adhesive composition after compounding the core-sheath filament through a heated extruder nozzle.

In another aspect, provided is a method of making a core-sheath filament, the method comprising:
a) forming a core composition comprising the adhesive core of the present disclosure;
b) forming a sheath composition comprising a non-tacky thermoplastic material; and
c) wrapping the sheath composition around the core composition to form the core-sheath filament, wherein the core-sheath filament has an average longest cross-sectional distance in a range of 1 to 20 millimeters and wherein the sheath exhibits a melt flow index of less than 15 grams per 10 minutes (g/10 min).

Features and advantages of the present disclosure will be further understood upon consideration of the detailed description as well as the appended claims.

### BRIEF DESCRIPTION OF THE DRAWINGS

FIG. 1 is a schematic perspective exploded view of a section of a core-sheath filament, according to an embodiment of the present disclosure.
FIG. 2 is a schematic cross-sectional view of a core-sheath filament, according to an embodiment of the present disclosure.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. The figures may not be drawn to scale.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. The figures may not be drawn to scale.

### DETAILED DESCRIPTION

Adhesive transfer tapes have been used extensively for adhering a first substrate to a second substrate. Adhesive transfer tapes are typically provided in rolls and contain a pressure-sensitive adhesive layer positioned on a release liner or between two release liners, and because transfer adhesive tapes often need to be die-cut to the desired size and shape prior to application to a substrate, the transfer adhesive tape that is outside the die-cut area is discarded as waste. The core-sheath filaments described herein can be used to deliver a pressure-sensitive adhesive (also referred to herein as a "hot-melt processable adhesive") without the use of a release liner and with less waste. The non-tacky sheath allows for easy handling of the hot-melt processable adhesive before deposition on a substrate. Furthermore, the use of the core-sheath filaments described herein as the adhesive composition can substantially reduce the waste often associated with adhesive transfer tapes as no die-cutting is required because the adhesive is deposited only in the desired area.

The disclosed core-sheath filaments can be used for printing a hot-melt processable adhesive using fused filament fabrication ("FFF"). The material properties needed for FFF dispensing typically are significantly different than those required for hot-melt dispensing of a pressure-sensitive adhesive composition. For instance, in the case of traditional hot-melt adhesive dispensing, the adhesive is melted into a liquid inside a tank and pumped out through a hose and nozzle. Thus, traditional hot-melt adhesive dispensing requires a low-melt viscosity adhesive, which is often quantified as a high melt flow index ("MFI") adhesive. If the viscosity is too high (or the MFI is too low), the hot-melt adhesive cannot be effectively transported from the tank to the nozzle. In contrast, FFF involves melting a filament only within a nozzle at the point of dispensing, and therefore is not limited to low melt viscosity adhesives (high melt flow index adhesives) that can be easily pumped. In fact, a high melt viscosity adhesive (a low melt flow index adhesive) can advantageously provide geometric stability of a hot-melt processable adhesive after dispensing, which allows for precise and controlled placement of the adhesive as the adhesive does not spread excessively after being printed.

In addition, suitable filaments for FFF typically need at least a certain minimum tensile strength so that large spools of filament can be continuously fed to a nozzle without breaking. The FFF filaments are usually spooled into level wound rolls. When filaments are spooled into level wound rolls, the material nearest the center can be subjected to high compressive forces. Preferably, the core-sheath filament is resistant to permanent cross-sectional deformation *(i.e.,* compression set) and self-adhesion *(i.e.,* blocking during storage).

Provided herein are adhesive systems including pressure-sensitive adhesives ("PSA") that are hot-melt processable, *i.e.,* hot-melt processable adhesives. The hot-melt processable adhesives are in a filament core/sheath form factor having a core and a non-tacky sheath such that the hot-melt processable adhesives can be post-cured by irradiation at 215 nm to 410 nm after compounding the core-sheath filament through a heated extruder nozzle. Delivery of the hot-melt processable adhesives can be completed via hotmelt dispense including techniques used in filament-based additive manufacturing.

The disclosed core-sheath filaments include a core that is encapsulated by a sheath that prevents the wound filament from sticking to itself, enables easy unwind during additive manufacturing and other dispensing, and provides structural integrity such that the core-sheath filaments can be advanced to a heated extruder nozzle by mechanical means. Typically, the sheath is thin, has a composition such that it melts and mixes homogenously with the hot-melt processable adhesive core at the printer/extruder nozzle before application onto substrates, and has no surface tackiness at normal storage conditions.

Organic light-emitting diodes ("OLEDs") are gaining popularity in displays and light sources because of their low power consumption, high response speed, and excellent space utilization. Their usage is often limited because of their poor durability against external factors like oxygen and moisture. There is a need for adhesives that can improve the durability of OLEDs. A class of materials including alkene and diene-based rubbers is particularly interesting for these applications because of its inherent barrier properties against oxygen and moisture, in addition to other desirable properties such as, for example cohesive strength.

In the present disclosure core-sheath filaments are provided that comprise cores having diene-based rubbers that are crosslinked by multifunctional acrylates, thus resulting in superior high-temperature performance adhesives. The adhesive compositions have excellent durability against oxygen and moisture, low and stable dielectric properties, and superior high-temperature performance.

### Core-Sheath Filaments

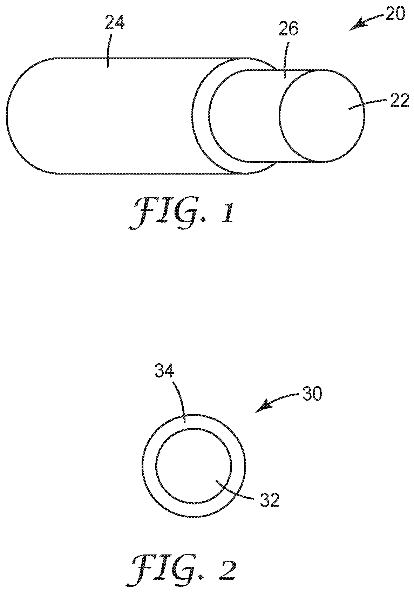

An example core-sheath filament 20 is shown schematically in FIG. 1. The filament includes a core 22 and a sheath 24 surrounding (encasing) the outer surface 26 of the core 22. FIG. 2 shows the core-sheath filament 30 in a cross-sectional view. The core 32 is surrounded by the sheath 34. Any desired cross-sectional shape can be used for the core. For example, the cross-sectional shape can be a circle, oval, square, rectangular, triangular, or the like. The cross-sectional area of the core 32 is typically larger than the cross-sectional area of the sheath 34.

The core-sheath filament usually has a relatively narrow longest cross-sectional distance (e.g., diameter for cores that have a circular cross-sectional shape) so that it can use used in applications where precise deposition of an adhesive is needed or advantageous. For instance, the core-sheath filament usually has an average longest cross-sectional distance in a range of 1 to 20 millimeters (mm). The average longest cross-sectional distance of the filament can be at least 1 mm, at least 2 mm, at least 3 mm, at least 4 mm, at least 5 mm, at least 6 mm, at least 8 mm, or at least 10 mm and can be up to 20 mm, up to 18 mm, up to 15 mm, up to 12 mm, up to 10 mm, up to 8 mm, up to 6 mm, or up to 5 mm. This average length can be, for example, in a range of 2 to 20 mm, 5 to 15 mm, or 8 to 12 mm.

Often, 1 to 10 percent of the longest cross-sectional distance (e.g., diameter) of the core-sheath filament is the sheath and 90 to 99 percent of the longest cross-sectional distance (e.g., diameter) of the core-sheath filament is the core. For example, up to 10 percent, up to 8 percent, up to 6 percent, or up to 4 percent and at least 1 percent, at least 2 percent, or at least 3 percent of the longest cross-sectional distance can be due to the sheath with the remainder being attributable to the core. The sheath extends completely around the core to prevent the core from sticking to itself. In some embodiments, however, the ends of the filament may contain only the core.

Often, the core-sheath filament has an aspect ratio of length to longest cross-sectional distance *(e.g.,* diameter) of 50: 1 or greater, 100:1 or greater, or 250: 1 or greater. Core-sheath filaments having a length of at least about 20 feet (6 meters) can be useful for printing a hot-melt processable adhesive. Depending on the application or use of the core-sheath filament, having a relatively consistent longest cross-sectional distance (e.g., diameter) over its length can be desirable. For instance, an operator might calculate the amount of material being melted and dispensed based on the expected mass of filament per predetermined length; but if the mass per length varies widely, the amount of material dispensed may not match the calculated amount. In some embodiments, the core-sheath filament has a maximum variation of longest cross-sectional distance (e.g., diameter) of 20 percent over a length of 50 centimeters (cm), or even a maximum variation in longest cross-sectional distance (e.g., diameter) of 15 percent over a length of 50 cm.

Core-sheath filaments described herein can exhibit a variety of desirable properties, both as prepared and as a hot-melt processable adhesive composition. As formed, a core-sheath filament desirably has strength consistent with being handled without fracturing or tearing of the sheath. The structural integrity needed for the core-sheath filament varies according to the specific application of use. Preferably, a core-sheath filament has strength consistent with the requirements and parameters of one or more additive manufacturing devices *(e.g.,* 3D printing systems). One additive manufacturing apparatus, however, could subject the core-sheath filament to a greater force when feeding the filament to a deposition nozzle than a different apparatus.

Advantageously, the elongation at break of the sheath material of the core-sheath filament is typically 50 percent or greater, 60 percent or greater, 80 percent or greater, 100 percent or greater, 250 percent or greater, 400 percent or greater, 750 percent or greater, 1000 percent or greater, 1400 percent or greater, or 1750 percent or greater and 2000 percent or less, 1500 percent or less, 900 percent or less, 500 percent or less, or 200 percent or less. Stated another way, the elongation at break of the sheath material of the core-sheath filament can range from 50 percent to 2000 percent. In some embodiments, the elongation at break is at least 60 percent, at least 80 percent, or at least 100 percent. Elongation at break can be measured, for example, by the methods outlined in ASTM D638-14, using test specimen Type IV.

Advantages provided by at least certain embodiments of employing the core-sheath filament as a pressure-sensitive adhesive once it is melted and mixed include one or more of: low volatile organic compound ("VOC") characteristics, avoiding die cutting, design flexibility, achieving intricate non-planar bonding patterns, printing on thin and/or delicate substrates, and printing on an irregular and/or complex topography.

Any suitable method known to those of skill in the relevant arts can be used to prepare the core-sheath filaments. Most methods include forming a core composition that is a hot-melt processable adhesive. The hot-melt processable adhesive in the core includes at least one of a styrene-isoprene block copolymer and an isobutylene-isoprene copolymer, and a multifunctional (meth)acrylate. These methods further include forming a sheath composition comprising a non-tacky thermoplastic material. These methods still further include wrapping the sheath composition around the core composition.

In many embodiments, the method of making the core-sheath filament includes co-extruding the core composition and the sheath composition through a coaxial die such that the sheath composition surrounds the core composition. Optional additives for the core composition, which is a hot-melt processable adhesive, can be added in an extruder (e.g., a twin-screw extruder) equipped with a side stuffer that allows for the inclusion of additives. Similarly, optional additives can be added to a sheath composition in the extruder. The hot-melt processable adhesive core can be extruded through the center portion of a coaxial die having an appropriate longest cross-sectional distance (i.e., diameter) while the non-tacky sheath can be extruded through the outer portion of the coaxial die. One suitable die is a filament spinning die as described in U.S. Patent No. 7,773,834 (Ouderkirk et al.). Optionally, the filament can be cooled upon extrusion using a water bath. The filament can be lengthened using a belt puller. The speed of the belt puller can be adjusted to achieve a desired filament cross-sectional distance (e.g., diameter).

In other embodiments, the core can be formed by extrusion of the core composition. The resulting core can be rolled within a sheath composition having a size sufficient to surround the core. In still other embodiments, the core composition can be formed as a sheet. A stack of the sheets can be formed having a thickness suitable for the filament. A sheath composition can be positioned around the stack such that the sheath composition surrounds the stack.

Suitable components of the core-sheath filament are described in detail below.

### Sheath

The sheath provides structural integrity to the core-sheath filament, as well as separating the adhesive core so that it does not adhere to itself (such as when the filament is provided in the form of a spool or roll) or so that is does not prematurely adhere to another surface. The sheath it typically selected to be thick enough to support the filament form factor and to allow for delivery of the core-sheath filament to a deposition location. On the other hand, the thickness of the sheath is selected so that its presence does not adversely affect the overall adhesive performance of the core-sheath filament.

The sheath material is typically selected to have a melt flow index ("MFI") that is less than or equal to 15 grams/10 minutes when measured in accord with ASTM D1238 at 190°C and a load of 2.16 kilograms. Such a low melt flow index is indicative of a sheath material that has sufficient strength (robustness) to allow the core-sheath filament to withstand the physical manipulation required for handling such as for use with an additive manufacturing apparatus. During such processes, the core-sheath filament often needs to be unwound from a spool, introduced into the additive manufacturing apparatus, and then advanced into a nozzle for melting and blending without breaking. Compared to sheath materials with a higher melt flow index, the sheath materials with a melt flow index that is less than or equal to 15 grams/10 minutes are less prone to breakage (tensile stress fracture) and can be wound into a spool or roll having a relatively small radius of curvature. In certain embodiments, the sheath material exhibits a melt flow index of 14 grams/10 minutes or less, 13 grams/10 minutes or less, 11 grams/10 minutes or less, 10 grams/10 minutes or less, 8 grams/10 minutes or less, 7 grams/10 minutes or less, 6 grams/10 minutes or less, 5 grams/10 minutes or less, 4 grams/10 minutes or less, 3 grams/10 minutes or less, 2 grams/10 minutes or less, or 1 grams/10 minutes or less. If desired, various sheath materials can be blended (e.g., melted and blended) together to provide a sheath composition having the desired melt flow index.

Low melt flow index values tend to correlate with high melt viscosities and high molecular weight. Higher molecular weight sheath materials tend to result in better mechanical performance. That is, the sheath materials tend to be more robust *(i.e.,* the sheath materials are tougher and less likely to undergo tensile stress fracture). This increased robustness is often the result of increased levels of polymer chain entanglements. The higher molecular weight sheath materials are often advantageous for additional reasons. For example, these sheath materials tend to migrate less to adhesive/substrate interface in the final article; such migration can adversely affect the adhesive performance, especially under aging conditions. In some cases, however, block copolymers with relatively low molecular weights can behave like high molecular weight materials due to physical crosslinks. That is, the block copolymers can have low MFI values and good toughness despite their relatively low molecular weights.

As the melt flow index is lowered (such as to less than or equal to 15 grams/10 minutes), less sheath material is required to obtain the desired mechanical strength. That is, the thickness of the sheath layer can be decreased and its contribution to the overall longest cross-sectional distance (e.g., diameter) of the core-sheath filament can be reduced. This is advantageous because the sheath material may adversely impact the adhesive properties of the core pressure-sensitive adhesive if it is present in an amount greater than about 10 weight percent of the total weight of the filament.

For application to a substrate, the core-sheath filament is typically melted and mixed together before deposition on the substrate. The sheath material desirably is blended with the hot-melt processable adhesive in the core without adversely impacting the performance of the hot-melt processable adhesive. To blend the two compositions effectively, it is often desirable that the sheath composition is compatible with the core composition.

If the core-sheath filament is formed by co-extrusion of the core composition and the sheath composition, the melt viscosity of the sheath composition is desirably selected to be fairly similar to that of the core composition. If the melt viscosities are not sufficiently similar (such as if the melt viscosity of the core composition is significantly lower than that of the sheath composition), the sheath may not surround the core in the filament. The filament can then have exposed core regions and the filament may adhere to itself. Additionally, if the melt viscosity of the sheath core composition is significantly higher than the core composition, during melt blending of the core composition and the sheath composition during dispensing, the non-tacky sheath may remain exposed (not blended sufficiently with the core) and adversely impact formation of an adhesive bond with the substrate. The melt viscosities of the sheath composition to the melt viscosity of the core composition is in a range of 100:1 to 1:100, in a range of 50:1 to 1:50, in a range of 20:1 to 1:20, in a range of 10:1 to 1:10, or in a range of 5:1 to 1:5. In many embodiments, the melt viscosity of the sheath composition is greater than that of the core composition. In such situations, the viscosity of the sheath composition to the core composition is typically in a range of 100:1 to 1:1, in a range of 50:1 to 1:1, in a range of 20:1 to 1:1, in a range of 10:1 to 1:1, or in a range of 5:1 to 1:1.

In addition to exhibiting strength, the sheath material is non-tacky. A material is non-tacky if it passes a "Self-Adhesion Test", in which the force required to peel the material apart from itself is at or less than a predetermining maximum threshold amount, without fracturing the material. Employing a non-tacky sheath allows the filament to be handled and optionally printed, without undesirably adhering to anything prior to deposition onto a substrate.

In certain embodiments, the sheath material exhibits a combination of at least two of low MFI *(e.g.,* less than or equal to 15 grams/10 minutes), moderate elongation at break *(e.g.,* 100% or more as determined by ASTM D638-14 using test specimen Type IV), low tensile stress at break (e.g., 10 MPa or more as determined by ASTM D638-14 using test specimen Type IV), and moderate Shore D hardness *(e.g.,* 30-70 as determined by ASTM D2240-15). A sheath having at least two of these properties tends to have the toughness suitable for use in FFF-type applications.

In some embodiments, to achieve the goals of providing structural integrity and a non-tacky surface, the sheath comprises a material selected from styrenic copolymers (*e.g.,* styrenic block copolymers such as styrene-butadiene block copolymers), polyolefins (*e.g.,* polyethylene, polypropylene, and copolymers thereof), ethylene vinyl acetates, polyurethanes, ethylene methyl acrylate copolymers, ethylene (meth)acrylic acid copolymers, nylon, (meth)acrylic block copolymers, poly(lactic acid), anhydride modified ethylene acrylate resins, and the like. Depending on the method of making the core-sheath filament, it may be advantageous to at least somewhat match the polarity of the sheath polymeric material with that of the polymer in the core.

Suitable styrenic materials for use in the sheath are commercially available and include, for example and without limitation, styrenic materials under the trade designation KRATON (*e.g.,* KRATON D116 P, D1118, D1119, and A1535) from Kraton Performance Polymers (Houston, TX, USA), under the trade designation SOLPRENE (*e.g.,* SOLPRENE S-1205) from Dynasol (Houston, TX, USA), under the trade designation QUINTAC from Zeon Chemicals (Louisville, KY, USA), under the trade designations VECTOR and TAIPOL from TSRC Corporation (New Orleans, LA, USA), and under the trade designations K-RESIN *(e.g.,* K-RESIN DK11) from Ineos Styrolution (Aurora, IL, USA).

Suitable polyolefins are not particularly limited. Suitable polyolefin resins include for example and without limitation, polypropylene (*e.g.,* a polypropylene homopolymer, a polypropylene copolymer, and/or blends comprising polypropylene), polyethylene (e.g., a polyethylene homopolymer, a polyethylene copolymer, high density polyethylene ("HDPE"), medium density polyethylene ("MDPE"), low density polyethylene ("LDPE"), and combinations thereof. For instance, suitable commercially available LDPE resins include PETROTHENE NA217000 available from LyondellBasell (Rotterdam, Netherlands) with a MFI of 5.6 grams/10 minutes, MARLEX 1122 available from Chevron Phillips (The Woodlands, TX) Suitable HDPE resins include ELITE 5960G from Dow Chemical Company (Midland, MI, USA) and HDPE HD 6706 series from ExxonMobil (Houston, TX, USA). Polyolefin block copolymers are available from Dow Chemical under the trade designation INFUSE (*e.g.,* INFUSE 9807).

Suitable commercially available thermoplastic polyurethanes include for instance and without limitation, ESTANE 58213 and ESTANE ALR 87A available from the Lubrizol Corporation (Wickliffe, OH)

Suitable ethylene vinyl acetate ("EVA") polymers *(i.e.,* copolymers of ethylene with vinyl acetate) for use in the sheath include resins from Dow, Inc. (Midland, MI) available under the trade designation ELVAX. Typical grades range in vinyl acetate content from 9 to 40 weight percent and a melt flow index of as low as 0.3 grams per 10 minutes. (per ASTM D1238). One exemplary material is ELVAX 3135 SB with a MFI of 0.4 grams per 10 minutes. Suitable EVAs also include high vinyl acetate ethylene copolymers from LyondellBasell (Houston, TX) available under the trade designation ULTRATHENE. Typical grades range in vinyl acetate content from 12 to 18 weight percent. Suitable EVAs also include EVA copolymers from Celanese Corporation (Dallas, TX) available under the trade designation ATEVA. Typical grades range in vinyl acetate content from 2 to 26 weight percent.

Suitable nylon materials for use in the sheath include a nylon terpolymeric material from Nylon Corporation of America under the trade designation NYCOA CAX.

Suitable polyethylene methyl acrylate) for use in the sheath include resins from Dow Inc. (Midland, MI, USA) under the trade designation ELVALOY *(e.g.,* ELVALOY 1330 with 30 percent methyl acrylate and a MFI of 3.0 grams/10 minutes, ELVALOY 1224 with 24 percent methyl acrylate and a MFI of 2.0 grams/10 minutes, and ELVALOY 1609 with 9 percent methyl acrylate and a MFI of 6.0 grams/10 minutes).

Suitable anhydride modified ethylene acrylate resins are available from Dow under the trade designation BYNEL such as BYNEL 21E533 with a MFI of 7.3 grams/10 minutes and BYNEL 30E753 with a MFI of 2.1 grams/10 minutes.

Suitable ethylene (meth)acrylic copolymers for use in the sheath include resins from Dow, Inc. under the trade designation NUCREL (*e.g.,* NUCREL 925 with a MFI of 25.0 grams/10 minutes and NUCREL 3990 with a MFI of 10.0 grams/10 minutes).

Suitable (meth)acrylic block copolymers for use in the sheath include block copolymers from Kuraray (Chiyoda-ku, Tokyo, JP) under the trade designation KURARITY (e.g., KURARITY LA2250and KURAITY LA4285). KURARITY LA2250, which has a MFI of 22.7 grams/10 minutes, is an ABA block copolymer with poly(methyl methacrylate) as the A blocks and poly(n-butyl acrylate) as the B block. About 30 weight percent of this polymer is poly(methyl methacrylate). KURAITY LA4285, which has a MFI of 1.8 grams/10 minutes, is an ABA block copolymer with poly(methyl methacrylate) as the A blocks and poly(n-butyl acrylate as the B block. About 50 weight percent of this polymer is poly(methyl methacrylate). Varying the amount of poly(methyl methacrylate) in the block copolymer alters its glass transition temperature and its toughness.

Suitable poly(lactic acid) for use in the sheath include those available from Natureworks, LLC (Minnetonka, NM, USA) under the trade designation INGEO *(e.g.,* INGEO 6202D Fiber grade).

The sheath typically makes up 1 to 10 weight percent of the total weight of the core-sheath filament. The amount can be at least 1 weight percent, at least 2 weight percent, at least 3 weight percent, at last 4 weight percent, at least 5 weight percent and up to 10 weight percent, up to 9 weight percent, up to 8 weight percent, up to 7 weight percent, up to 6 weight percent, or up to 5 weight percent.

### Core

Cores of the present disclosure may be prepared by processes known to those of ordinary skill in the relevant arts and include at least 20 wt. % to 60 wt.% of a polymer selected from the group consisting of a styrene-isoprene block copolymer and an isobutylene-isoprene copolymer and a multifunctional (meth)acrylate.

The styrene-isoprene block copolymer may have various structures including a linear A-B-A triblock block copolymer structure and (A-B)nX radial (*e.g.,* multi-arm) block copolymer wherein A is a polyvinyl aromatic blocks, B is a conjugated diene block, n is an integer of at least 2 or 3, typically ranging up to 6, 7, 8, 9, 10, 11, or 12 and X is the residue of a coupling agent. The unsaturated midblock of the block copolymer can be tapered or non-tapered but is typically non-tapered. As used herein, the terminology styrene-isoprene block copolymer refers to both the linear and radial (*e.g.,* multi-arm) structures unless specified otherwise.

The polyvinyl aromatic block, A, may be any polyvinyl aromatic block known for block copolymers. The polyvinyl aromatic block is typically derived from the polymerization of vinyl aromatic monomers having 8 to 12 carbon atoms such as styrene, o-methylstyrene, p-methylstyrene, alphamethylstyrene, p-tert-butylstyrene, 2,4-dimethylstyrene vinylnaphthalene, vinyltoluene, vinylxylene, vinylpyridine, ethylstyrene, t-butylstyrene, isopropylstyrene, dimethylstyrene, other alkylated styrenes, and mixtures thereof. Most typically, the polyvinyl aromatic block is derived from the polymerization of substantially pure styrene monomer or styrene monomer as a major component with minor concentrations of other vinyl aromatic monomers, as described above. The amount of other vinyl aromatic monomer(s) is typically no greater than 10, 9, 8, 7, 6, 5, 4, 3, 2, 1, or 0.5 % by weight of the total amount of polymerized vinyl aromatic monomer.

In some embodiments, styrene-isoprene block copolymer comprises little or no diblock. Thus, the diblock content is less than 10, 9, 8, 7, 6, 5, 4, 3, 2, or 1 wt.% based on the total weight of the block copolymer.

In other embodiments, the styrene-isoprene block copolymer further comprises appreciable amounts of A-B diblock wherein A is a polyvinyl aromatic block and B is a conjugated diene block. For example, the diblock content may be at least 15, 20, 25, or 30 wt.% of the total block copolymer. In some embodiments, the diblock content of the block copolymer is typically no greater than 70, 60, 50, or 40 wt.% of the total second SIS block copolymer.

Various types of styrene-isoprene-styrene (SIS) block copolymers are commercially available, such as under the trade designation KRATON D (*e.g.,* KRATON D1340, KRATON D 116 1).

In some embodiments, the styrene-isoprene block copolymer has a number average molecular weight ranging from 25,000 to 250,000 g/mole. In some embodiments, the number average molecular weight of the styrene-isoprene block copolymer is at least 30,000; 35,000 or 40,000 g/mole. In some embodiments, the number average molecular weight of the styrene-isoprene block copolymer is no greater than 200,000, 175,000, 150,000, or 100,000 g/mole.

In other embodiments, the styrene-isoprene block copolymer has a higher molecular weight. In some embodiments, the styrene-isoprene block copolymer has a number average molecular weight of at least 300,000; 400,000; or 500,000 g/mol. In some embodiments, the styrene-isoprene block copolymer has a number average molecular weight of at least 600,000; 700,000; 800,000; 900,000 or 1,000,000 g/mol. In some embodiments, the styrene-isoprene block copolymer has a number average molecular weight of at least 1,250,000 or 1,500,000. The molecular weight of the styrene-isoprene block copolymer is typically no greater than 1,750,000 or 2,000,000 g/mole.

In some embodiments, the molecular weight of the polyvinyl aromatic (e.g. polystyrene) end blocks of the styrene-isoprene block copolymer is about the same and the block copolymer may be characterized as symmetrical. In other embodiments, the molecular weight of the polyvinyl aromatic (e.g. polystyrene) end blocks is different and the block copolymer may be characterized as asymmetrical. In some embodiments, the number average molecular weight of the lower molecular weight polyvinyl aromatic (e.g. polystyrene) end block is at least 1,000 to about 10,000 g/mole, typically from about 2,000 to about 9,000 g/mole, more typically between 4,000 and 7,000 g/mole. The number average molecular weight of the higher molecular weight polyvinyl aromatic (e.g. polystyrene) end block is in the range from about 5,000 to about 50,000 g/mole, typically from about 10,000 to about 35,000 g/mole.

In some embodiments, the number of arms of the block copolymer containing a higher molecular weight end block is at least 5, 10 or 15 percent of the total number of arms of the styrene-isoprene block copolymer. In some embodiments, the number of arms containing a higher molecular weight end block is no greater than 70, 65, 60, 55, 50, 45, or 35 percent of the total number of arms of the block copolymer.

The asymmetrical block copolymer typically comprises from about 4 to 40 percent by weight of a polyvinyl aromatic monomer (e.g. polystyrene), and from about 60 to 96 percent by weight of a polymerized conjugated diene(s). In some embodiments, the asymmetrical block copolymer comprises from about 5 to 25 percent of a polymerized vinyl aromatic monomer (*e.g.* styrene) and from about 95 to 75 percent of a polymerized conjugated diene, and more typically from about 6 to 15 percent of a polymerized vinyl aromatic monomer and from about 94 to 85 percent of polymerized conjugated diene.

In some embodiments, the core polymer may include copolymers of isobutylene and isoprene, copolymers of isobutylene and butadiene, and halogenated butyl rubbers obtained by brominating or chlorinating these copolymers wherein the halogen (e.g. chloride, bromide) content is less than 1, 0.5, 0.25, 0.1, 0.01, or 0.001 mole percent ("mol %") of the isobutylene-isoprene copolymer.

In some embodiments, the mol% of isoprene of the butyl rubber is at least 0.5 or 1 mol%. In some embodiments, the mol% of isoprene of the butyl rubber is no greater than 3, 2.5, 2 or 1.5 mol%. In some embodiments, the Mooney viscosity ML 1+8- at 125°C (ASTM D1646) of the butyl rubber is typically at least 25, 30, 35, or 40. In some embodiments, the Mooney viscosity ML 1+8- at 125°C of the butyl rubber is typically no greater than 60 or 55. Butyl rubber is commercially available from various suppliers such as Exxon.

The composition further includes various ethylenically unsaturated (*e.g.* free-radically polymerizable) monomers that can provide various technical benefits. The ethylenically unsaturated monomer is a different monomer than use in the preparation of the styrene-isoprene block copolymer or the isobutylene-isoprene copolymer. Thus, the ethylenically unsaturated monomer is not styrene, isoprene, or butylene. The ethylenically unsaturated monomer typically comprises (meth)acryl or vinyl ether groups. The term "meth(acryl)" includes (meth)acrylate and (meth)acrylamide. In embodiments of the present disclosure the monomer is multifunctional, comprising at least 2, 3, 4, 5, or 6 ethylenically unsaturated (*e.g.* free-radically polymerizable) groups. Suitable ethylenically unsaturated (e.g. free-radically polymerizable) groups include for example (meth)acrylate, (meth)acrylamide, vinyl ether groups, and alkenyl. The multifunctional monomers can comprise different ethylenically unsaturated (*e.g.* free-radically polymerizable) groups on the same monomer.

In typical embodiments, the molecular weight (Mn) of the ethylenically unsaturated monomer is at least 200 g/mole, 250 g/mole, 300 g/mole, 350 g/mole, 400 g/mole, or 450 g/mole. In typical embodiments, the molecular weight is less than 5000, 4500, 3000, 3500, 3000, 2500, 2000, or 1500 g/mole. As used herein, the term monomer also includes oligomers having a molecular weight up to 10,000 g/mole.

In some embodiments, the composition can contain at least two multifunctional monomers, as well as at least one monofunctional monomer(s) in combination with at least one multifunctional monomer(s). The composition can contain a single aliphatic monomer, a single aromatic monomer, or various combinations thereof. The combinations can include at least two aliphatic monomers, at least two aromatic monomers, as well as at least one aliphatic monomer(s) in combination with at least one aromatic monomer(s).

The total amount of ethylenically unsaturated monomer can vary. For example, the composition may contain only a small amount of ethylenically unsaturated monomer for the purpose of adjusting the adhesion or cohesive strength of the composition. Higher concentrations may be used for the purpose of raising the refractive index. Thus, in some embodiments, the composition comprises at least 1, 2, 3, 4, or 5 wt.-% of ethylenically unsaturated monomer(s). In some embodiments, the composition comprises at least 6, 7, 8, 9, 10, 11, 12, 13, 14 or 15 wt.-% of ethylenically unsaturated monomer(s). The amount of ethylenically unsaturated monomer(s) is typically no greater than 60, 50, 40, 35, 30, 25, or 20 wt.-% of the composition.

In some embodiments, the ethylenically unsaturated (e.g. free-radically polymerizable) monomer is aliphatic. Aliphatic ethylenically unsaturated monomer have a lower refractive index than aromatic ethylenically unsaturated monomer. Aliphatic ethylenically unsaturated monomers, can usefully be employed to adjust the properties of the composition. For example, multifunctional monomers can be used to increase the cohesive strength.

In some embodiments, the aliphatic ethylenically unsaturated (e.g. free-radically polymerizable) monomers comprise a cyclic group. The number of carbon atoms of the aliphatic cyclic group is typically at least 10 ranging up to 20 or 30. In some embodiments, the aliphatic ethylenically unsaturated (e.g. free-radically polymerizable) monomer is polycyclic cycloalkane such as norbornane, adamantane, tricyclodecane, and tetracyclododecane or a polycyclic cycloalkene such as norbornene, tricyclodecene, and tetracyclododecene, and the like.

Specific examples of difunctional cycloaliphatic compounds can be represented by the following formula (I). 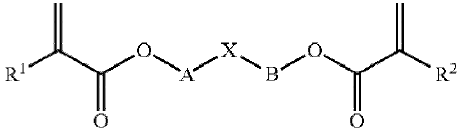
wherein X is a divalent polycyclic hydrocarbon group, as just described;
R¹ and R² are independently hydrogen or methyl; and
A and B are independently a covalent bond or an alkylene groups having at 1 to 10 carbon atoms and in some embodiments no greater 6, 5, 4, or 3 carbon atoms.

In some embodiments, the aromatic ethylenically unsaturated (e.g. free-radically polymerizable) monomers typically comprise sulfur atoms, halogen atoms (e.g. bromine), and/or at least two aromatic rings. The aromatic rings may be fused or unfused. In some embodiments, the number of aromatic rings is no greater than 6, 5, or 4.

The aromatic multifunctional ethylenically unsaturated monomer may be synthesized or purchased. The aromatic multifunctional ethylenically unsaturated monomer typically contains a major portion, i.e. at least 60-70 wt-%, of a specific structure. It is commonly appreciated that other reaction products are also typically present as a byproduct of the synthesis of such monomers.

In some embodiments, the aromatic multifunctional ethylenically unsaturated monomer comprises a major portion having the following general structure: 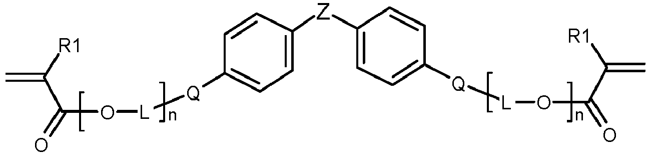 wherein Z is independently -C(CH₃)₂-, -CH₂-, -C(O)-, -S-, -S(O)-, or -S(O)₂-, each Q is independently O or S. L is a linking group. L may independently comprise a branched or linear C₂-C₆ alkyl group and n ranges from 0 to 10. More preferably L is C₂ or C₃ and n is 0, 1, 2 or 3. The carbon chain of the alkyl linking group may optionally be substituted with one or more hydroxy groups. For example L may be - CH₂CH(OH)CH₂-Typically, the linking groups are the same. R1 is independently hydrogen or methyl.

One bisphenol-A ethoxylated diacrylate monomer is commercially available from Sartomer under the trade designations "SR602" (reported to have a viscosity of 610 cps at 20°C and a Tg of 2°C). Another bisphenol-A ethoxylated diacrylate monomer is as commercially available from Sartomer under the trade designation "SR601" (reported to have a viscosity of 1080 cps at 20°C and a Tg of 60°C).

Various (meth)acrylated aromatic epoxy oligomers are commercially available. For example, (meth)acrylated aromatic epoxy, (described as a modified epoxy acrylates), are available from Sartomer, Exton, PA under the trade designation "CN1 18", and "CN1 15". (Meth)acrylated aromatic epoxy oligomer, (described as an epoxy acrylate oligomer), is available from Sartomer under the trade designation "CN2204". Further, a (meth)acrylated aromatic epoxy oligomer, (described as an epoxy novolak acrylate blended with 40% trimethylolpropane triacrylate), is available from Sartomer under the trade designation "CN112C60". One aromatic epoxy acrylate is commercially available from Sartomer under the trade designation "CN 120" (reported by the supplier to have a refractive index of 1.5556, a viscosity of 2150 at 65°C, and a Tg of 60°C).

In some embodiments, the aromatic multifunctional ethylenically unsaturated monomer is a biphenyl multifunctional ethylenically unsaturated monomer. Such monomer may comprise a major portion having the following general structure: 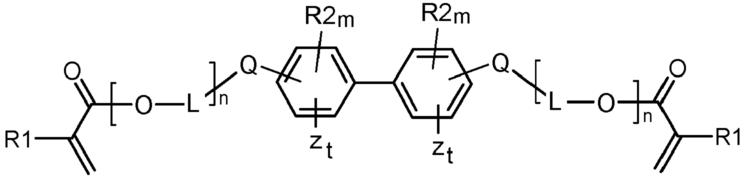
wherein each R1 is independently H or methyl;
each R2 is independently H or Br;
m ranges from 0 to 4;
each Q is independently O or S;
n ranges from 0 to 10;
L is a C2 to C12 alkylene group optionally substituted with one or more hydroxyl groups;
z is a (e.g. fused) aromatic ring; and
t is independently 0 or 1.

In some embodiments, Q is preferably O. Further, n is typically 0, 1 or 2. L is typically C₂ or C₃. Alternatively, L is typically a hydroxyl substituted C₂ or C₃.

Preferably, at least one of the -Q[L-O]n C(O)C(R1)=CH₂ groups is substituted at the ortho or meta position. More preferably, the biphenyl di(meth)acrylate monomer comprises a sufficient amount of ortho and/or meta (meth)acrylate substituents such that the monomer is a liquid at 25°C.

Such biphenyl monomers are described in further detail in U.S. Publication No. US2008/0221291. Other biphenyl di(meth)acrylate monomer are described in the literature.

Representative structures wherein t is 0 or 1 include:

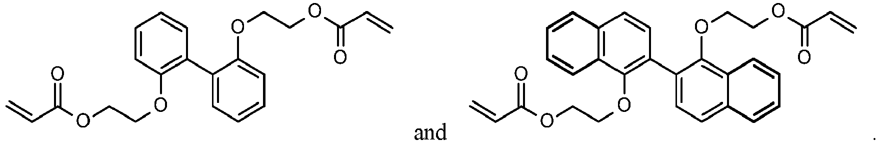

In some embodiments, the aromatic monofunctional or multifunctional ethylenically monomer is a triphenyl monomer such as described in WO2008/112452.

In some embodiments, the aromatic multifunctional ethylenically unsaturated monomer is a fluorene-containing multifunctional ethylenically unsaturated monomer. Such monomer may comprise a major portion having the following general structure: 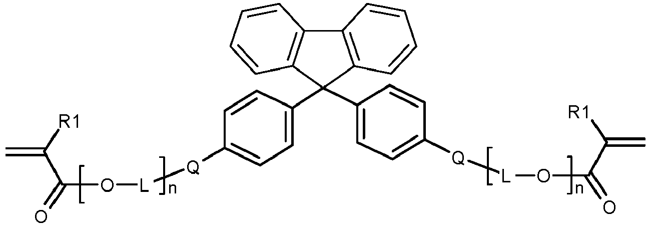 wherein each Q is independently O or S. L is a divalent linking group. L may independently comprise a branched or linear C₂-C₁₂ alkylene group and n ranges from 0 to 10. L preferably comprises a branched or linear C₂-C₆ alkylene group. More preferably L is C₂ or C₃ and n is 0, 1, 2 or 3. The carbon chain of the alkylene linking group may optionally be substituted with one or more hydroxy groups. For example L may be -CH₂CH(OH)CH₂-. Typically, the linking groups are the same. R1 is independently hydrogen or methyl.

One commercially available fluorene-containing multifunctional ethylenically unsaturated monomer, wherein n totals 10 (n = 5) is available from Miwon as "HR6100".

Another commercially available fluorene-containing multifunctional ethylenically unsaturated monomer is 9,9-bis[4-(2-acryloyloxyethoxy)phenyl]fluorene (NK Ester A-BPEF), available from Shin-Nakamura. The structure of this monomer is shown as follows:

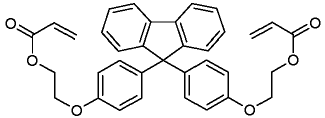

In some embodiments, the ethylenically unsaturated monomer(s) are present as an (e.g. uncured) ethylenically unsaturated monomer at the time the (e.g. adhesive) composition is applied to a substrate. In some embodiments, the ethylenically unsaturated monomer(s) are present as an (e.g. uncured) ethylenically unsaturated monomer after utilizing the (e.g. adhesive) composition is applied to a substrate. In some embodiments, the ethylenically unsaturated monomer is present as an (e.g. uncured or partially cured) ethylenically unsaturated monomer at the time the (e.g. adhesive) composition is applied to a substrate, yet the ethylenically unsaturated monomer is cured or in other words (e.g. completely) polymerized by exposure to heat or actinic radiation thereafter. In yet another embodiment, the ethylenically unsaturated monomer is cured or in other words (e.g. completely) polymerized by exposure to heat or actinic radiation) before applying the (e.g. adhesive) composition to a substrate.

When the ethylenically unsaturated monomer is partially cured, some of the monomer is polymerized and some ethylenically unsaturated monomer remains present in the composition. When the ethylenically unsaturated monomer is completely cured, substantially all the monomer is polymerized.

The (e.g. adhesive) composition may optionally comprise one or more additives such as tackifiers, plasticizers (e.g. oils, polymers that are liquids at 25°C), antioxidants (e.g., hindered phenol compounds, phosphoric esters, or derivatives thereof), ultraviolet light absorber (e.g., benzotriazole, oxazolic acid amide, benzophenone, or derivatives thereof), in-process stabilizers, anti-corrosives, passivation agents, light stabilizers, processing assistants, elastomeric polymers (e.g. other block copolymers), scavenger fillers, nanoscale fillers, transparent fillers, desiccants, crosslinkers, pigments, organic solvents, etc. The total concentration of such additives ranges from 0 - 60 wt.-% of the total (e.g. adhesive) composition.

The adhesive composition optionally comprises a tackifier. In some embodiments the adhesive composition comprises a tackifier. The concentration of tackifier can vary depending on the intended (e.g. pressure sensitive) adhesive composition. In some embodiments, the amount of tackifier is at least 1, 2, 3, 4, 5, 6, 7, 8, 9, 10, 11, 12, 13, 14, 15 wt.-%. The maximum amount of tackifier is typically no greater than 60, 55, 50, 45, 40, 35, or 30 wt.-%. Increasing the (e.g. solid at 25°C) tackifier concentration typically raises the Tg of the adhesive. In other embodiments, the adhesive composition comprises little or no tackifier. Thus, the concentration of tackifier is less than 5, 4, 3, 2, 1, 0.5, or 0.1 wt.-%.

The tackifier can have any suitable softening temperature or softening point. The softening temperature is often less than 200°C, less than 180°C, less than 160°C, less than 150°C, less than 125°C, or less than 120°C. In applications that tend to generate heat, however, the tackifier is often selected to have a softening point of at least 75°C. Such a softening point helps minimize separation of the tackifier from the rest of the adhesive composition when the adhesive composition is subjected to heat such as from an electronic device or component. The softening temperature is often selected to be at least 80°C, at least 85°C, at least 90°C, or at least 95°C. In applications that do not generate heat, however, the tackifier can have a softening point less than 75°C.

Suitable tackifiers include hydrocarbon resins and hydrogenated hydrocarbon resins, e.g., hydrogenated cycloaliphatic resins, hydrogenated aromatic resins, or combinations thereof. Suitable tackifiers are commercially available and include, e.g., those available under the trade designation ARKON (e.g., ARKON P or ARKON M) from Arakawa Chemical Industries Co., Ltd. (Osaka, Japan); those available under the trade designation ESCOREZ (e.g., ESCOREZ 1315, 1310LC, 1304, 5300, 5320, 5340, 5380, 5400, 5415, 5600, 5615, 5637, and 5690) from Exxon Mobil Corporation, Houston, TX; and those available under the trade designation REGALREZ (e.g., REGALREZ 1085, 1094, 1126, 1139, 3102, and 6108) from Eastman Chemical, Kingsport, TN. The above tackifiers may be characterized as midblock tackifiers, being compatible with the isoprene block of the SIS/SI block copolymer. In some embodiments, the adhesive may comprise an endblock aromatic tackifier that is compatible with the styrene block of the block copolymer.

In some embodiments, the (e.g. adhesive) composition further comprise at least one free-radical initiator.

Useful photoinitiators include those known as useful for photocuring free-radically polyfunctional (meth)acrylates. Exemplary photoinitiators include benzoin and its derivatives such as alpha-methylbenzoin; alpha-phenylbenzoin; alpha-allylbenzoin; alpha benzylbenzoin; benzoin ethers such as benzil dimethyl ketal (e.g., 2,2-Dimethoxy-2-phenylacetophenone obtained under the trade designation of "OMNIRAD BDK" from IGM Resins USA Inc., St. Charles, IL), benzoin methyl ether, benzoin ethyl ether, benzoin n-butyl ether; acetophenone and its derivatives such as 2-hydroxy-2-methyl-1-phenyl-1-propanone (e.g., available under the trade designation OMNIRAD 1173 from IGM Resins USA Inc., St. Charles, IL) and 1-hydroxycyclohexyl phenyl ketone (e.g., available under the trade designation OMNIRAD 184 from IGM Resins USA Inc., St. Charles, IL); 2-methyl-1-[4-(methylthio)phenyl]-2-(4-morpholinyl)-1-propanone (e.g., available under the trade designation OMNIRAD 907 from IGM Resins USA Inc., St. Charles, IL); 2-benzyl-2-(dimethylamino)-1-[4-(4-morpholinyl)phenyl]-1-butanone (e.g., available under the trade designation OMNIRAD 369 from IGM Resins USA Inc., St. Charles, IL) and phosphine oxide derivatives such as ethyl-2,4,6-trimethylbenzoylphenyl phoshinate (e.g. available under the trade designation TPO-L from IGM Resins USA Inc., St. Charles, IL), and bis-(2,4,6-trimethylbenzoyl)-phenylphosphineoxide (e.g., available under the trade designation OMNIRAD 819 from IGM Resins USA Inc., St. Charles, IL).

Other useful photoinitiators include, for example, pivaloin ethyl ether, anisoin ethyl ether, anthraquinones (e.g., anthraquinone, 2-ethylanthraquinone, 1-chloroanthraquinone, 1,4-dimethylanthraquinone, 1-methoxyanthraquinone, or benzanthraquinone), halomethyltriazines, benzophenone and its derivatives, iodonium salts and sulfonium salts, titanium complexes such as bis(eta5-2,4-cyclopentadien-1-yl)-bis[2,6-difluoro-3-(1H-pyrrol-1-yl) phenyl]titanium (e.g., available under the trade designation CGI 784DC from BASF, Florham Park, NJ); halomethyl-nitrobenzenes (e.g., 4-bromomethylnitrobenzene), and combinations of photoinitiators where one component is a mono- or bis-acylphosphine oxide (e.g., available under the trade designations IRGACURE 1700, IRGACURE 1800, and IRGACURE 1850 from BASF, Florham Park, NJ, and under the trade designation OMNIRAD 4265 from IGM Resins USA Inc., St. Charles, IL); and halomethyltriazine-based photoinitiators such as are 2-[2-(4-methoxy-phenyl)-vinyl]-4,6-bis-trichloromethyl [1,3,5]triazine, 2-(4-methoxy-phenyl)-4,6-bis-trichloromethyl [1,3,5]triazine, 2-(3,4-dimethoxyphenyl)-4,6-bis-trichloromethyl [1,3,5]triazine, and 2-methyl-4,6-bis-trichloromethyl [1,3,5] triazine.

In some embodiments, a thermal free-radical initiator may be used. Suitable classes of thermal, free-radical initiators include, but are not limited to thermally labile azo compounds and peroxides. Non-limiting examples of thermally labile azo compounds include those under the trade designation VAZO from the Chemours Company (Wilmington, DE), such as 2,2'-azobisisobutyronirile, 2,2'-azobis-2-methylbutyronitrile, 2,2'- azobis-2-methylvaleronitrile, 2,2'-azobis-2,3-dimethylbutyronitrile, and combinations thereof and the like. Non-limiting examples of peroxides include, but are not limited, to organic peroxides under the trade designation LUPEROX available from Arkema Inc. (Philadelphia, PA), and include cumene hydroperoxide, methyl ethyl ketone peroxide, benzoyl peroxide, di-t-butyl peroxide, di-t-amyl peroxide, t-butyl-cumyl peroxide, dicumyl peroxide, t-butyl hydroperoxide, t-butyl peracetate, di-n-propyl peroxydicarbonate and combinations thereof and the like.

Generally, the initiator(s) are used in amounts of 0.01 to 10 parts by weight, more typically 0.1 to 2.0, parts by weight relative to 100 parts by weight of the total composition.

In some embodiments, the (e.g. adhesive) composition comprises an ultraviolet absorber (UVA) (e.g., benzotriazole) at a concentration of at least 1, 1.5, 2, 2.5, 3, 3.5, 4, 4.5, or 5 wt.-% of the adhesive composition. The concentration of the ultraviolet absorber (e.g., benzotriazole) is typically no greater than 15, 14, 13, 12, or 10 wt.-%. In some embodiments, the inclusion of the ultraviolet absorbent (e.g., benzotriazole) can reduce the transmission (e.g. of a 50 micron thick layer) at 380 and 385 nm to less than 20, 15, 10, 9, 8, 7, 6, 5, 4, 3, or 2%. In other words, the transmission can be less than 0.4%, 0.3%, 0.2%, 0.1%, 0.09%, 0.08%, 0.07%, 0.06%, 0.05% or 0.04% per micron thickness of (e.g. adhesive) composition.

When it is desired for the (e.g. adhesive) composition to be transparent, the composition is typically free of fillers having a particle size greater than 100 nm that can detract from the transparency of the adhesive composition. In this embodiment, the total amount of filler of the composition is no greater than 10, 9, 8, 7, 6, 5, 4, 3, or 2 wt.-% solids of the adhesive composition. In some favored embodiments, the composition comprises no greater than 1, 0.5, 0.1, or 0.05 wt.-% of filler.

However, in other embodiments, the (e.g. adhesive) composition may comprise higher amounts of inorganic oxide filler such as fumed silica.

In other embodiments, the compositions may be characterized as hot-melts. Such (*e.g.* adhesive) composition are typically applied from the melt and are solvent-free. Alternatively, a solidified hot melt or dried solvent based (*e.g.* adhesive) composition may be applied to a substrate or between substrates. The (e.g. adhesive) composition may be heated after application to the substrate.

The thickness of the (e.g. adhesive) composition layer is typically at least 10, 15, 20, or 25 microns (1 mil) ranging up to 500 microns (20 mils) thickness. In some embodiments, the thickness of the (e.g. adhesive) composition layer is no greater than 400, 300, 200, or 100 microns. The (e.g. adhesive) composition can be coated in single or multiple layers. The layers may be continuous or discontinuous.

The composition comprising photoinitiator may be irradiated with UV radiation having a UVA maximum in the wavelength range of 280 to 425 nanometers to polymerize the ethylenically unsaturated monomer(s). UV light sources can be of various types. Low light intensity sources, such as blacklights, generally provide intensities ranging from 0.1 or 0.5 mW/cm² (millwatts per square centimeter) to 10 mW/cm² (as measured in accordance with procedures approved by the United States National Institute of Standards and Technology as, for example, with a UVIMAP UM 365 L-S radiometer manufactured by Electronic Instrumentation & Technology, Inc., in Sterling, VA). High light intensity sources generally provide intensities greater than 10, 15, or 20 mW/cm² ranging up to 450 mW/cm² or greater. In some embodiments, high intensity light sources provide intensities up to 500, 600, 700, 800, 900 or 1000 mW/cm². UV light to polymerize the ethylenically unsaturated monomer(s) can be provided by various light sources such as light emitting diodes (LEDs), blacklights, medium pressure mercury lamps, etc. or a combination thereof. The monomer component(s) can also be polymerized with higher intensity light sources as available from Fusion UV Systems Inc. The UV exposure time for polymerization and curing can vary depending on the intensity of the light source(s) used. For example, complete curing with a low intensity light course can be accomplished with an exposure time ranging from about 30 to 300 seconds; whereas complete curing with a high intensity light source can be accomplished with shorter exposure time ranging from about 5 to 20 seconds. Partial curing with a high intensity light source can typically be accomplished with exposure times ranging from about 2 seconds to about 5 or 10 seconds.

In some favored embodiments, the composition is a pressure sensitive adhesive. Pressure sensitive adhesives are often characterized as having a storage modulus (G') at the application temperature, typically room temperature (e.g. 25°C), of less than 3 × 10⁵ Pa (0.3 MPa) when measured at a frequency of 1 Hz. As used herein, storage modulus (G') refers to the value obtained utilizing Dynamic Mechanical Analysis (DMA) per the test method described in the examples. In some embodiments, the pressure sensitive adhesive composition has a storage modulus of less than 2 × 10⁵ Pa, 1 × 10⁵ Pa, 9 × 10⁴ Pa, 8 × 10⁴ Pa, 7 × 10⁴ Pa, 6 × 10⁴ Pa, 5 × 10⁴ Pa, 4 × 10⁴ Pa, or 3 × 10⁴ Pa. In some embodiments, the composition has a storage modulus (G') of at least 2.0 × 10⁴ Pa or 2.5 × 10⁴ Pa. In some embodiments, the pressure sensitive adhesive has a tan delta no greater than 0.7, 0.6, 0.5, or 0.4 at 150°C. The pressure sensitive adhesive composition typically has tan delta of at least 0.01 or 0.05 at 150°C.

In some embodiments, curing the ethylenically unsaturated monomer can increase the storage modulus by at least 10,000; 20,000; 30,000; 40,000; 50,000; 60,000, or 70,000 Pa.

Pressure sensitive adhesives are often characterized as having a glass transition temperature "Tg" below 25°C; whereas other adhesives may have a Tg of 25°C or greater, typically ranging up to 50°C. As used herein, Tg refers to the value obtained utilizing DMA per the test method described in the examples. In some embodiments, the pressure sensitive adhesive composition has a Tg no greater than 20°C, 15°C, 10°C, 5°C, 0°C, or -5°C. The Tg of the pressure sensitive adhesive is typically at least -40°C, -35°C, - 30°C, -25°C, or -20°C.

Pressure sensitive adhesive are often characterized as having adequate adhesion. In some embodiments, the peel adhesion (e.g. to glass), as measured according to the test method described in the examples, is at least 0.1, 0.5, 1, 2, 3, 4, or 5 N/cm ranging up to for example 15, 16, 17, 18, 19, or 20 N/dm.

In some embodiments, curing the ethylenically unsaturated monomer can reduce the peel adhesion to stainless steel by 1 or 2 N/dm.

As used herein, the term "adhesive" refers to a pressure sensitive adhesive unless specified otherwise.

### Method of Printing

A method of printing a hot-melt processable adhesive is provided. The method includes forming a core-sheath filament as described above. The method further includes melting the core-sheath filament and blending the sheath with the core to form a molten composition. The method still further includes dispensing the molten composition through a nozzle onto a substrate. The molten composition can be formed before reaching the nozzle, can be formed by mixing in the nozzle, or can be formed during dispensing through the nozzle, or a combination thereof. Preferably, the sheath composition is uniformly blended throughout the core composition.

Fused filament fabrication ("FFF"), which is also known under the trade designation "FUSED DEPOSITION MODELING" from Stratasys, Inc., Eden Prairie, Minn., is a process that uses a thermoplastic strand fed through a hot can to produce a molten aliquot of material from an extrusion head. The extrusion head extrudes a bead of material in 3D space as called for by a plan or drawing (*e.g.,* a computer aided drawing ("CAD") file). The extrusion head typically lays down material in layers, and after the material is deposited, it fuses.

One suitable method for printing a core-sheath filament comprising an adhesive onto a substrate is a continuous non-pumped filament fed dispensing unit. In such a method, the dispensing throughput is regulated by a linear feed rate of the core-sheath filament allowed into the dispense head. In most currently commercially available FFF dispensing heads, an unheated filament is mechanically pushed into a heated zone, which provides sufficient force to push the filament out of a nozzle. A variation of this approach is to incorporate a conveying screw in the heated zone, which acts to pull in a filament from a spool and also to create pressure to dispense the material through a nozzle. Although addition of the conveying screw into the dispense head adds cost and complexity, it does allow for increased throughput, as well as the opportunity for a desired level of component mixing and/or blending. A characteristic of filament fed dispensing is that it is a true continuous method, with only a short segment of filament in the dispense head at any given point.

There can be several benefits to filament fed dispensing methods compared to traditional hot-melt adhesive deposition methods. First, filament fed dispensing methods typically permits quicker changeover to different adhesives. Also, these methods do not use a semi-batch mode with melting tanks and this minimizes the opportunity for thermal degradation of an adhesive and associated defects in the deposited adhesive. Filament fed dispensing methods can use materials with higher melt viscosity, which affords an adhesive bead that can be deposited with greater geometric precision and stability without requiring a separate curing or crosslinking step. In addition, higher molecular weight raw materials can be used within the adhesive because of the higher allowable melt viscosity. This is advantageous because uncured hot-melt pressure sensitive adhesives containing higher molecular weight raw materials can have significantly improved high temperature holding power while maintaining stress dissipation capabilities.

The form factor for FFF filaments is usually a concern. For instance, consistent cross-sectional shape and longest cross-sectional distance (*e.g.,* diameter) assist in cross-compatibility of the core-sheath filaments with existing standardized FFF filaments such as ABS or polylactic acid ("PLA"). In addition, consistent longest cross-section distance (e.g., diameter) helps to ensure the proper throughput of adhesive because the FFF dispense rate is generally determined by the feed rate of the linear length of a filament. Suitable longest cross-sectional distance variation of the core-sheath filament according to at least certain embodiments when used in FFF includes a maximum variation of 20 percent over a length of 50 cm, or even a maximum variation of 15 percent over a length of 50 cm.

Extrusion-based layered deposition systems (*e.g.,* fused filament fabrication systems) are useful for making articles including printed adhesives in methods of the present disclosure. Deposition systems having various extrusion types of are commercially available, including single screw extruders, twin screw extruders, hot-end extruders (*e.g.,* for filament feed systems), and direct drive hot-end extruders *(e.g.,* for elastomeric filament feed systems). The deposition systems can also have different motion types for the deposition of a material, including using XYZ stages, gantry cranes, and robot arms. Common manufacturers of additive manufacturing deposition systems include Stratasys, Ultimaker, MakerBot, Airwolf, WASP, MarkForged, Prusa, Lulzbot, BigRep, Cosin Additive, and Cincinnati Incorporated. Suitable commercially available deposition systems include for instance and without limitation, BAAM, with a pellet fed screw extruder and a gantry style motion type, available from Cincinnati Incorporated (Harrison, OH); BETABRAM Model P 1, with a pressurized paste extruder and a gantry style motion type, available from Interelab d.o.o. (Senovo, Slovenia); AM1, with either a pellet fed screw extruder or a gear driven filament extruder as well as a XYZ stages motion type, available from Cosine Additive Inc. (Houston, TX); KUKA robots, with robot arm motion type, available from KUKA (Sterling Heights, MI); and AXIOM, with a gear driven filament extruder and XYZ stages motion type, available from AirWolf 3D (Fountain Valley, CA).

Three-dimensional articles including a printed adhesive can be made, for example, from computer-aided drafting ("CAD") models in a layer-by-layer manner by extruding a molten adhesive onto a substrate. Movement of the extrusion head with respect to the substrate onto which the adhesive is extruded is performed under computer control, in accordance with build data that represents the final article. The build data is obtained by initially slicing the CAD model of a three-dimensional article into multiple horizontally sliced layers. Then, for each sliced layer, the host computer generates a build path for depositing roads of the composition to form the three-dimensional article having a printed adhesive thereon. In select embodiments, the printed adhesive comprises at least one groove formed on a surface of the printed adhesive. Optionally, the printed adhesive forms a discontinuous pattern on the substrate.

The substrate onto which the molten adhesive is deposited is not particularly limited. In many embodiments, the substrate comprises a polymeric part, a glass part, or a metal part. Use of additive manufacturing to print an adhesive on a substrate may be especially advantageous when the substrate has a non-planar surface, for instance a substrate having an irregular or complex surface topography. Before depositing molten adhesive to the surface of the substrate, the substrate is treated with one or more primers, as described above. The primer is typically applied as a solvent-borne liquid, by any suitable method, which may include, for example, brushing, spraying, dipping, and the like. In some embodiments, the substrate surface may be treated with one or more organic solvents (*e.g.,* methyl ethyl ketone, aqueous isopropanol solution, acetone) prior to application of the primer.

The core-sheath filament can be extruded through a nozzle carried by an extrusion head and deposited as a sequence of roads on a substrate in an x-y plane. The extruded molten adhesive fuses to previously deposited molten adhesive as it solidifies upon a drop-in temperature. This can provide at least a portion of the printed adhesive. The position of the extrusion head relative to the substrate is then incremented along a z-axis (perpendicular to the x-y plane), and the process is repeated to form at least a second layer of the molten adhesive on at least a portion of the first layer. Changing the position of the extrusion head relative to the deposited layers may be carried out, for example, by lowering the substrate onto which the layers are deposited. The process can be repeated as many times as necessary to form a three-dimensional article including a printed adhesive resembling the CAD model. Further details can be found, for example, Turner, B.N. et al., "A review of melt extrusion additive manufacturing processes: I. process design and modeling"; Rapid Prototyping Journal 20/3 (2014) 192-204. In certain embodiments, the printed adhesive comprises an integral shape that varies in thickness in an axis normal to the substrate. This is particularly advantageous in instances where a shape of adhesive is desired that cannot be formed using die cutting of an adhesive. In some embodiments, it may desirable to apply only a single adhesive layer as it may be advantageous, for example, to minimize material use and/or reduce the size of the final bond line.

A variety of fused filament fabrication 3D printers may be useful for carrying out the method according to the present disclosure. Many of these are commercially available under the trade designation "FDM" from Stratasys, Inc., Eden Prairie, MN, and subsidiaries thereof. Desktop 3D printers for idea and design development and larger printers for direct digital manufacturing can be obtained from Stratasys and its subsidiaries, for example, under the trade designations "MAKERBOT REPLICATOR", "UPRINT", "MOJO", "DIMENSION", and "FORTUS". Other 3D printers for fused filament fabrication are commercially available from, for example, 3D Systems, Rock Hill, SC, and Airwolf 3D, Costa Mesa, CA.

In certain embodiments, the method further comprises mixing the molten composition (*e.g.,* mechanically) prior to dispensing the molten composition. In other embodiments, the process of being melted in and dispensed through the nozzle may provide sufficient mixing of the composition such that the molten composition is mixed in the nozzle, during dispensing through the nozzle, or both.

The temperature of the substrate onto which the adhesive can be deposited may also be adjusted to promote the fusing of the deposited adhesive. In the method according to the present disclosure, the temperature of the substrate may be, for example, at least about 100 °C, 110 °C, 120 °C, 130 °C, or 140 °C up to 175 °C or 150 °C.

The printed adhesive prepared by the method according to the present disclosure may be an article useful in a variety of industries, for example, the aerospace, apparel, architecture, automotive, business machines products, consumer, defense, dental, electronics, educational institutions, heavy equipment, jewelry, medical, and toys industries. The composition of the sheath and the core can be selected so that, if desired, the printed adhesive is clear.

The printed adhesive prepared by the method according to the present disclosure may be particularly useful in improving the durability of OLEDs due at least in part to cores having diene-based rubbers that are crosslinked by multifunctional acrylates, thus resulting in superior high-temperature performance adhesives having excellent durability against oxygen and moisture, low and stable dielectric properties, and superior high-temperature performance.

Specifically, the disclosed filament can be used as a sealing member for electronic devices, for example, organic devices such as an organic transistor, an organic memory, and an organic EL element; liquid crystal displays; electronic paper; thin film transistors; electrochromic devices; electrochemical light-emitting devices; touch panels; solar batteries; thermoelectric conversion devices; piezoelectric conversion devices; electric storage devices; and the like.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight. Unless otherwise indicated, all other reagents were obtained, or are available from fine chemical vendors such as Sigma-Aldrich Company, St. Louis, Missouri, or may be synthesized by known methods. The following abbreviations are used in this section: min = minutes, s = second, g = gram, mg = milligram, kg = kilogram, m = meter, centimeter = cm, mm = millimeter, µm = micrometer or micron, °C = degrees Celsius, °F = degrees Fahrenheit, N = Newton, oz = ounce, Pa=Pascal, MPa = mega Pascal, rpm = revolutions per minute, phr = parts per hundred, psi = pressure per square inch, cc/rev = cubic centimeters per revolution, cm³ = centimeters cubed, mol = mole; J/cm^2 = Joules per centime squared, dm = decimeter, rad = radian.

### Table 1 (below) lists materials used in the examples and their sources.

**Table 1: Material List**

| DESIGNATION | DESCRIPTION |
|---|---|
| D1340 | SIS polymer, obtained under the trade designation "KRATON D 1340" from Kraton, Houston, TX |
| D1161 | SIS polymer, obtained under the trade designation "KRATON D 1161" from Kraton, Houston, TX |
| TPO-L | Photo-initiator, obtained under the trade designation "TPO-L" from BASF Corporation, Florham Park, NJ |
| XL-330 | Proton abstractor, obtained under the trade designation "XL-330" from BASF Corporation, Florham Park, NJ |
| TMPTA | Trimethylolpropane triacrylate, obtained under the trade designation "TMPTA" from Sartomer, Exton, PA |
| CN309 | Hydrophobic diacrylate, obtained under the trade designation "CN309" from Sartomer, Exton, PA |
| ESCOREZ 5340 | Hydrogenated Hydrocarbon Resin, obtained under the trade designation "ESCOREZ 5340" from ExxonMobil, Houston, TX |
| BR 268 | Polyisobutylene (Mwt ~ 75 Kg/Mol), obtained under the trade designation "Butyl 268-S" from ExxonMobil, Houston, TX |
| LDPE | Low Density Polyethylene, obtained under the trade designation "PETROTHENE NA217000" from Lyondell Bassell, Houston, TX |

### TEST PROCEDURES

### Melt Flow Index Test Method

Samples were tested according to ASTM D1238 with a load of 2.16 kg at 190°C, the total number of grams expelled over a 10 minute period were massed and reported as g/10min (grams per 10 minutes). An average of at least 8 samples was used for the reported value.

### Shear Strength Test Method

Shear tests were conducted using 12.7 mm wide adhesive tapes prepared in the examples. A stainless steel panel was cleaned by wiping (first with heptane and then with acetone) and drying. Tapes were applied to the panel such that a 12.7 mm by 25.4 mm portion of each adhesive tape was in firm contact with the panel and the trailing end portion of each tape was free (i.e. not attached to the panel). The panel with tape was held in a rack so that the panel formed an angle of 180° with the extended free end and a 500 g weight was attached to the free end. The test was conducted under controlled temperature and humidity conditions and the time elapsed for each tape to separate from the test panel was recorded as the shear strength in minutes. Three shear tests were performed for each adhesive sample and the results averaged.

### Test Method for G' (@25C) and Tan Delta (@°150C)

Adhesive samples pressed to 40 mils using a Carver press, as described in the section "ADHESIVE FORMATION FROM CORE-SHEATH FILAMENTS" were tested for both G' and Tan Delta. The equipment used was Discovery Hybrid Rheometer (obtained from TA Instruments, New Castle, DE) or equivalent stress or strain-controlled air bearing rheometer, equipped with 25 mm 0-degree upper plate and lower Peltier plate within ECT (environmental chamber). Tan Delta was measured at 1 rad/s by doing a frequency sweep from 0.1 to 100 rad/s at 10% strain and 150°C with a holding normal force of 30g +/- 40g.

G' at 25°C and tan delta at 150°C were recorded.

### SAMPLE PREPARATION

### PREPARATION METHOD: Examples 1-3 (E1-E3) and Comparative Examples 1-3 (CE1-CE3)

a) Preparation of core
The batch preparation of PSA cores C1-C6 (using composition in Table 2 below) was carried out using a Plasti-corder unit (obtained from Brabender, South Hackensack, NJ) equipped with an electrically heated three-part mixer with a capacity of approximately 55 cm³ and high shear counter-rotating blades. The mixer was preheated to 160°C and set at a mixing speed of 60 rpm and the PSA core components totaling 50 g were added directly to the top of the mixing barrel. The mixing operation was run for 5 minutes, at which time the mixture appeared homogeneous and transparent.
b) Preparation of sheath and formation of core-sheath filaments
Films of non-tacky sheaths were prepared by hot melt pressing pellets of LPDE to average thickness of 7-10 mils (0.1778 - 0.254mm) in a Model 4389 hot press (Carver, Inc., Wabash) at 140°C (284°F). Rectangles of film 1.5 inch (3.77 cm) in width and 2.7 - 5.9 inch (7 - 15 cm) in length were cut and hand rolled to encircle the compounded core formulations (as described in part a) to yield a core/sheath filament 12 mm in diameter.

**Table 2: Core Compositions**

| Sample | Core | D1340 | D1161 | B268 | Escorez 5340 | TPO-L | XL-330 | TMPTA | CN309 |
|---|---|---|---|---|---|---|---|---|---|
| CE1 | C1 | 60 | | | 40 | | | | |
| CE2 | C2 | | 60 | | 40 | | | | |
| CE3 | C3 | | | 75 | 25 | | | | |
| E1 | C4 | 60 | | | 40 | 0.1 | | 2 | |
| E2 | C5 | | 60 | | 40 | 0.1 | | 2 | |
| E3 | C6 | | | 75 | 25 | | 0.1 | | 20 |

### ADHESIVE FORMATION FROM CORE-SHEATH FILAMENTS: Examples 1-3 (EX1-3) and Comparative Examples 1-3 (CE1-CE3)

For preparing adhesives out of the core-sheath filaments, core-sheath filaments (as described in Table 3 below) were fed into a Brabender Plasti-corder (South Hackensack, NJ) unit equipped with an electrically heated three-part mixer with a capacity of approximately 55 cm³ and high shear counter-rotating blades. The mixer was preheated to 160°C and set at a mixing speed of 60 rpm and the core-sheath filaments were added directly to the top of the mixing barrel as three separate filaments totaling 50 g. The mixing operation was run for 5 minutes, at which time the mixture appeared homogeneous and transparent. Following this, the mixture is pressed to an average thickness of 5 mils in a Carver press at 140°C. The flat 5 mil sample is allowed to cool at room temperature after which it is exposed to 2 J/cm² of UV-A energy at 365 nm wavelength.

**Table 3: Examples 1-3 (E1-E3) and Comparative Examples 1-3 (CE1-CE3)**

| Example | Core | Sheath |
|---|---|---|
| CE1 | C1 | LDPE |
| CE2 | C2 | LDPE |
| CE3 | C3 | LDPE |
| E1 | C4 | LDPE |
| E2 | C5 | LDPE |
| E3 | C6 | LDPE |

### RESULTS

### Melt Flow Index Measurements

For the sheath material used in Core-Sheath filament, the melt flow index was measured using Melt Flow Index Test Method described above and recorded in the literature as below:

**Table 4: Melt Flow Index Value of Sheath Material**

| Sheath | MFI Method | MFI (g/10min) |
|---|---|---|
| NA217000 LDPE | Literature | 5.6 |

### Compounded Core-Sheath Filament PSA Performance

Several tests were run on the final compounded PSA samples per the methods described above in the Test Methods Section. The results and measurements are reported below in Table 5.

**Table 5: Compounded Filament PSA Performance**

| Sample | Tan Delta of Pre-mix @ 150°C | Tan Delta of Filament @150°C | Tan Delta of Adhesive @ 150°C | Static Shear (mins) | G' @25°C of Adhesive (Pa) |
|---|---|---|---|---|---|
| CE1 | 0.69 | 0.63 | 0.72 | 1946 | 112134 |
| CE2 | 1.41 | 1.33 | 1.49 | 1431 | 92145 |
| CE3 | 0.73 | 0.74 | 0.78 | 3328 | 119124 |
| E1 | 0.68 | 0.63 | 0.21 | >10000 | 134562 |
| E2 | 1.39 | 1.34 | 0.34 | >10000 | 109873 |
| E3 | 0.79 | 0.82 | 0.32 | 8928 | 129354 |

The preceding description, given in order to enable one of ordinary skill in the art to practice the claimed disclosure, is not to be construed as limiting the scope of the disclosure, which is defined by the claims.

## Claims

1. A core-sheath filament comprising:
a non-tacky sheath, wherein the non-tacky sheath exhibits a melt flow index of less than 15 grams per 10 minutes (g/10 min) when measured as set forth in ASTM D1238 with a load of 2.16 kg at 190°C; and
an adhesive core, wherein the adhesive core comprises:
at least 20 wt. to % 60 wt.% of a polymer selected from the group consisting of a styrene-isoprene block copolymer and an isobutylene-isoprene copolymer; and
a multifunctional (meth)acrylate.

2. The core-sheath filament of claim 1, wherein the non-tacky sheath comprises LDPE.

3. The core-sheath filament of claim 1 or claim 2, wherein the core-sheath filament comprises 1 to 10 weight percent sheath and 90 to 99 weight percent hot-melt processable adhesive core based on a total weight of the core-sheath filament.

4. The core-sheath filament of any one of claims 1 to 3, wherein the polystyrene-polyisoprene-polystyrene block copolymer further comprises a polyvinyl aromatic end block.

5. The core-sheath filament of any one of claims 1 to 4, wherein the adhesive core further comprises a tackifier.

6. The core-sheath filament of any one of claims 1 to 5, wherein the adhesive core further comprises an additive selected from the group consisting of a plasticizer, an anti-oxidant, a thermal stabilizer, a UV blocker, and combinations thereof.

7. The core-sheath filament of claim 6, wherein the core comprises 1 weight percent to 60 weight percent of the tackifier based on a total weight of the adhesive core.

8. The core-sheath filament of claim 7, wherein the tackifier comprises a cycloaliphatic hydrocarbon.

9. The core-sheath filament of any one of claims 1 to 8, wherein the multifunctional (meth)acrylate is selected from the group consisting of a diacrylate, a triacrylate, and combinations thereof.

10. The core-sheath filament of claim 1, wherein the adhesive core is a pressure-sensitive adhesive.

11. A cured adhesive composition comprising the core-sheath filament of any one of claims 1 to 8, the cured adhesive composition being a product resulting from irradiation at 215 nm to 410 nm of the adhesive composition after compounding the core-sheath filament through a heated extruder nozzle.

12. The cured adhesive composition of claim 10 or claim 11, wherein the cured adhesive composition exhibits a static shear performance of greater than 1000 minutes, greater than 2500 minutes, greater than 5000 minutes, greater than 7500 minutes, or greater than 100000 as measured by the Shear Strength Test Method.

13. A method of making a core-sheath filament, the method comprising:
a) forming a core composition comprising the adhesive core of claim 1;
b) forming a sheath composition comprising a non-tacky thermoplastic material; and
c) wrapping the sheath composition around the core composition to form the core-sheath filament, wherein the core-sheath filament has an average longest cross-sectional distance in a range of 1 to 20 millimeters, and wherein the sheath exhibits a melt flow index of less than 15 grams per 10 minutes (g/10 min) when measured as set forth in ASTM D1238 with a load of 2.16 kg at 190°C.

14. The method of claim 13, wherein the wrapping the sheath composition around the core composition comprises co-extruding the core composition and the sheath composition such that the sheath composition surrounds the core composition.

## Patentansprüche

1. Ein Kern-Hülle-Filament, umfassend:
eine nicht klebrige Hülle, wobei die nicht klebrige Hülle einen Schmelzflussindex von weniger als 15 Gramm pro 10 Minuten (g/10 min) besitzt, wenn er gemäß ASTM D1238 mit einer Last von 2.16 kg bei 190°C gemessen wird; und
einen Klebstoffkern, wobei der Klebstoffkern umfasst:
mindestens zu 20 Gew.-% bis 60 Gew.-% ein Polymer, das aus der Gruppe ausgewählt ist, bestehend aus einem Styrol-Isopren-Blockcopolymer und einem Isobutylen-Isopren-Copolymer; und
ein multifunktionelles (Meth)acrylat.

2. Das Kern-Hülle-Filament nach Anspruch 1, wobei die nicht klebrige Hülle LDPE umfasst.

3. Das Kern-Hülle-Filament nach Anspruch 1 oder 2, wobei das Kern-Hülle-Filament zu 1 bis 10 Gew.-% Hülle und zu 90 bis 99 Gew.-% heißschmelzverarbeitbaren Klebstoffkern basierend auf einem Gesamtgewicht des Kern-Hülle-Filaments umfasst.

4. Das Kern-Hülle-Filament nach einem der Ansprüche 1 bis 3, wobei das Polystyrol-Polyisopren-Polystyrol-Blockcopolymer ferner einen Polyvinylaromatischen Endblock umfasst.

5. Das Kern-Hülle-Filament nach einem der Ansprüche 1 bis 4, wobei der Klebstoffkern ferner einen Klebrigmacher umfasst.

6. Das Kern-Hülle-Filament nach einem der Ansprüche 1 bis 5, wobei der Klebstoffkern ferner ein Additiv umfasst, das aus der Gruppe ausgewählt ist, bestehend aus einem Weichmacher, einem Antioxidationsmittel, einem Thermostabilisator, einem UV-Blocker und Kombinationen davon.

7. Das Kern-Hülle-Filament nach Anspruch 6, wobei der Kern zu 1 Gew.-% bis 60 Gew.-% den Klebrigmacher basierend auf ein Gesamtgewicht des Klebstoffkerns umfasst.

8. Das Kern-Hülle-Filament nach Anspruch 7, wobei der Klebrigmacher einen cycloaliphatischen Kohlenwasserstoff umfasst.

9. Das Kern-Hülle-Filament nach einem der Ansprüche 1 bis 8, wobei das multifunktionelle (Meth)acrylat aus der Gruppe ausgewählt ist, bestehend aus einem Diacrylat, einem Triacrylat und Kombinationen davon.

10. Das Kern-Hülle-Filament nach Anspruch 1, wobei der Klebstoffkern ein druckempfindlicher Klebstoff ist.

11. Eine gehärtete Klebstoffzusammensetzung, umfassend das Kern-Hülle-Filament nach einem der Ansprüche 1 bis 8, wobei die gehärtete Klebstoffzusammensetzung ein Produkt ist, das aus einer Bestrahlung bei 215 nm bis 410 nm der Klebstoffzusammensetzung nach einem Compoundieren des Kern-Hülle-Filaments über eine beheizte Extruderdüse resultiert.

12. Die Klebstoffzusammensetzung nach Anspruch 10 oder 11, wobei die Klebstoffzusammensetzung eine statische Scherleistung von mehr als 1000 Minuten, mehr als 2500 Minuten, mehr als 5000 Minuten, mehr als 7500 Minuten oder mehr als 100000 besitzt, wie durch das Scherfestigkeitsprüfverfahren gemessen.

13. Ein Verfahren zum Herstellen eines Kern-Hülle-Filaments, das Verfahren umfassend:
a) Bilden einer Kernzusammensetzung, umfassend den Klebstoffkern nach Anspruch 1;
b) Bilden einer Hüllenzusammensetzung, umfassend ein nicht klebriges thermoplastisches Material; und
c) Umwickeln der Hüllenzusammensetzung um die Kernzusammensetzung herum, um das Kern-Hülle-Filament zu bilden, wobei das Kern-Hülle-Filament einen durchschnittlichen längsten Querschnittsabstand in einem Bereich von 1 bis 20 Millimetern aufweist, und wobei die Hülle einen Schmelzflussindex von weniger als 15 Gramm pro 10 Minuten (g/10 min) besitzt, wenn er gemäß ASTM D1238 mit einer Last von 2.16 kg bei 190°C gemessen wird.

14. Das Verfahren nach Anspruch 13, wobei das Wickeln der Hüllenzusammensetzung um die Kernzusammensetzung herum ein Koextrudieren der Kernzusammensetzung und der Hüllenzusammensetzung derart umfasst, dass die Hüllenzusammensetzung die Kernzusammensetzung umgibt.

## Revendications

1. Filament à âme-gaine comprenant:
une gaine non collante, la gaine non collante présentant un indice d'écoulement à l'état fondu inférieur à 15 grammes en 10 minutes (g/10 min) lorsqu'on mesure comme présenté dans ASTM D1238 avec une charge de 2.16 kg à 190°C; et
une âme adhésive, l'âme adhésive comprenant:
au moins 20% en poids à 60% en poids d'un polymère choisi dans le groupe constitué par un copolymère séquencé de styrène-isoprène et un copolymère d'isobutylène-isoprène; et
un (méth)acrylate multifonctionnel.

2. Filament à âme-gaine selon la revendication 1, dans lequel la gaine non collante comprend du PEBD.

3. Filament à âme-gaine selon la revendication 1 ou la revendication 2, le filament à âme-gaine comprenant 1 à 10 pour cent en poids de gaine et 90 à 99 pour cent en poids d'âme adhésive thermofusible en fonction d'un poids total du filament à âme-gaine.

4. Filament à âme-gaine selon l'une quelconque des revendications 1 à 3, dans lequel le copolymère séquencé de styrène-isoprène comprend en outre une séquence terminale polyvinylaromatique.

5. Filament à âme-gaine selon l'une quelconque des revendications 1 à 4, dans lequel l'âme adhésive comprend en outre un agent collant.

6. Filament à âme-gaine selon l'une quelconque des revendications 1 à 5, dans lequel l'âme adhésive comprend en outre un additif choisi dans le groupe constitué par un plastifiant, un antioxydant, un stabilisant thermique, un bloqueur d'UV, et des combinaisons de ceux-ci.

7. Filament à âme-gaine selon la revendication 6, dans lequel l'âme comprend 1 pour cent en poids à 60 pour cent en poids de l'agent collant en fonction d'un poids total de l'âme adhésive.

8. Filament à âme-gaine selon la revendication 7, dans lequel l'agent collant comprend un hydrocarbure cycloaliphatique.

9. Filament à âme-gaine selon l'une quelconque des revendications 1 à 8, dans lequel le (méth)acrylate multifonctionnel est choisi dans le groupe constitué par un diacrylate, un triacrylate, et des combinaisons de ceux-ci.

10. Filament à âme-gaine selon la revendication 1, dans lequel l'âme adhésive est un adhésif sensible à la pression.

11. Composition adhésive durcie comprenant le filament à âme-gaine selon l'une quelconque des revendications 1 à 8, la composition adhésive durcie étant un produit résultant d'une irradiation à 215 nm à 410 nm de la composition adhésive après élaboration du filament à âme-gaine à travers une buse d'extrudeuse chauffée.

12. Composition adhésive durcie selon la revendication 10 ou la revendication 11, la composition adhésive durcie présentant une performance de cisaillement statique supérieure à 1000 minutes, supérieure à 2500 minutes, supérieure à 5000 minutes, supérieure à 7500 minutes, ou supérieure à 100 000 minutes telle que mesurée par le procédé de test de résistance au cisaillement.

13. Procédé de fabrication d'un filament à âme-gaine, le procédé comprenant:
a) la formation d'une composition d'âme comprenant l'âme adhésive de la revendication 1 ;
b) la formation d'une composition de gaine comprenant un matériau thermoplastique non collant; et
c) l'enveloppement de la composition de gaine autour de la composition d'âme pour former le filament à âme-gaine, dans lequel le filament à âme-gaine a une distance transversale de plus grande longueur moyenne dans une plage de 1 à 20 millimètres, et dans lequel la gaine présente un indice d'écoulement à l'état fondu inférieur à 15 grammes en 10 minutes (g/10 min) lorsqu'on mesure comme présenté dans ASTM D1238 avec une charge de 2.16 kg à 190°C.

14. Procédé selon la revendication 13, dans lequel l'enveloppement de la composition de gaine autour de la composition d'âme comprend la coextrusion de la composition d'âme et de la composition de gaine de telle sorte que la composition de gaine entoure la composition d'âme.
